# EUROPEAN PATENT APPLICATION

(11) **EP 1 349 362 A2**
(43) Date of publication of application: **01.10.2003**
(21) Application number: 03005326.8
(22) Date of filing: 11.03.2003
(51) Int. Cl.: H04N 1/00

(54) **Image processing diagnostic method**

(30) Priority: 29.03.2002 JP 2002095548
(71) Applicant: Fuji Photo Film Co. Ltd., Kanagawa 250-0193 (JP)
(72) Inventor: Ishizuka, Katsuhisa, Fuji Photo Film Co., Ltd., Tokyo 106-8620 (JP)
(74) Representative: Klunker . Schmitt-Nilson . Hirsch

(57) **Abstract**

The present invention provides an image processing diagnostic method of diagnosing a quality of an image processing, including the following steps. A preparation step preparing an original 14 of a practical skill image, a standard practical skill image data, and an original 15. An obtaining step obtaining, by the printing system receiving: a practical skill image data obtained by processing the original 14; the standard practical skill image data; and a color chart data obtained by processing the original 15, a printed matter for diagnosis that is a sheet of paper on which a practical skill image A, a practical skill image B, and a color chart for diagnosis are printed. A diagnostic step performing a visual diagnosis using the practical skill images printed on the printed matter for diagnosis, and a numerical diagnosis according to colorimetric values of the color chart for diagnosis on the printed matter for diagnosis.

## Description

### BACKGROUND OF THE INVENTION

### Field of the Invention

The present invention relates to an image processing diagnostic method of diagnosing the quality of an image processing of an image processing apparatus for applying the image processing to image data created in an image input apparatus and outputting the same to a printing system.

### Description of the Related Art

Generally, in a printing company, a printed matter is created using an image input apparatus such as a scanner for receiving an image to create image data, an image processing apparatus for applying an image processing to the created image data, and a printing system for printing an image upon receipt of the image data processed by the image processing apparatus.

Accordingly, there is a need for a user side to always keep the printing system in a stable state. Realistically, however, it is extremely difficult to keep the printing system in the stable state.

Usually, when image processing data is created, an image input apparatus such as a scanner is used to read originals such as a positive, a negative, a color print, a monochrome, an illustration, an actual thing, a gray scale, and a digital image, so that an image processing apparatus processes image data outputted from the scanner. The image processing data thus obtained is fed to a printing system to create a printed matter. And the printed matter is visually determined to set up image processing conditions.

However, the processes, such as a selection of the original, a decision of the printed matter, and a set up of the image processing condition, have a lot of portions depending on experience and intuition of the person in charge, and thus the image processing conditions created by users are liable to vary. Further, it often happens that a user side cannot set up the optimal image processing condition and thus adjusts and sets up image processing data supplied from a maker of image processing apparatuses for each original.

Furthermore, the originals to be used in image processing are all different, and there is no standard. Thus, user's views are different from one another depending on quality of the original to be used. This involves such a problem that the quality of the printed matters would be easily uneven.

Still furthermore, when the image processing condition is set up, image processing data is created by an image processing apparatus assuming that the printing system now used is stable, and printing is performed. However, the printing system is not kept in a state that it is always stable since it is easily affected by various varying factors, and thus the image processing data created by the image processing apparatus is not always reflected on the printed matter properly.

### SUMMARY OF THE INVENTION

In view of the foregoing, it is an object of the present invention to provide an image processing diagnostic method capable of properly diagnosing the quality of an image processing of an image processing apparatus interposed between an image input apparatus and a printing system.

To achieve the above-mentioned object, the present invention provides an image processing diagnostic method of diagnosing a quality of an image processing of an image processing apparatus interposed between an image input apparatus for receiving an image to create image data and a printing system for receiving image data to print an image, said image processing apparatus receiving the image data created by said image input apparatus and applying image processing to the image data and then outputting the same to said printing system, said image processing diagnostic method comprising:
a preparation step of preparing an original of a practical skill image used in a visual diagnosis, a standard practical skill image data obtained through reading by a standard image input apparatus for the original and applying a standard image processing to the original, and an original of a color chart for diagnosis in which a series of color patches, which is suitable for a numerical diagnosis by colorimetric values, is arranged;
an obtaining step in which there is obtained a printed matter for diagnosis wherein printed on a sheet of paper by said printing system receiving: a practical skill image data obtained by means of reading for the original of the practical skill image prepared in said preparation step by said image input apparatus and applying an image processing to the original by said image processing apparatus; the standard practical skill image data prepared in said preparation step; and a color chart data obtained by means of reading for the original of the color chart for diagnosis prepared in said preparation step by said image input apparatus and applying an image processing to the original by said image processing apparatus, are a practical skill image A according to the practical skill image data, a practical skill image B according to the standard practical skill image data, and a color chart for diagnosis according to the color chart data; and
a diagnostic step in which there are carried out a visual diagnosis using the practical skill images printed on the printed matter for diagnosis obtained in said obtaining step, and a numerical diagnosis according to colorimetric values of the color patches constituting the color chart for diagnosis, which are printed on the printed matter for diagnosis.

According to the image processing diagnostic method of the present invention as mentioned above, a visual comparison of practical skill images printed on a sheet of printed matter for diagnosis in the same printing condition with one another makes it possible to compare an image processing by an image processing apparatus with the standard image processing. Further, according to the image processing diagnostic method of the present invention as mentioned above, it is possible to perform the visual diagnosis and the numerical diagnosis in accordance with the practical skill images and the color chart for diagnosis printed on a sheet of printed matter for diagnosis in the same printing condition. This feature makes it possible to comprehensively diagnose the quality of an image processing.

In the image processing diagnostic method according to the present invention as mentioned above, it is preferable that said preparation step also prepares a standard color chart data obtained through reading by said standard image input apparatus for the original of a color chart for diagnosis and applying the standard image processing to the original, and
said obtaining step obtains a printed matter for diagnosis in which printed on a sheet of paper is also a color chart for diagnosis according to the standard color chart data.

According to the image processing diagnostic method of the present invention as mentioned above, a comparison of numerical diagnostic results based on the color charts for diagnosis printed in the same printing condition with one another makes it possible to compare the image processing by the image processing apparatus with the standard image processing more in detail.

In the image processing diagnostic method according to the present invention as mentioned above, it is preferable that said preparation step also prepares profile creating color chart data representative of a profile creating color chart wherein a series of color patches, which is suitable for creating a printing profile representative of an association between the image data in said printing system and colors of printing images, is arranged; and
said obtaining step obtains a printed matter for diagnosis in which the profile creating color chart according to the profile creating color chart data prepared in said preparation step is also printed.

According to the image processing diagnostic method of the present invention as mentioned above, provision of the printing profile based on the profile creating color chart makes it possible to remove an effect of fluctuation of printing conditions in the printing system on the visual diagnosis and the numerical diagnosis. Thus, it is possible to exactly diagnose the image processing in the image processing apparatus.

In the image processing diagnostic method according to the present invention as mentioned above, it is preferable that said preparation step also prepares grey chart data representative of a grey chart consisting of a plurality of grey patches mutually different from one another in grey balance; and
said obtaining step obtains a printed matter for diagnosis in which the grey chart according to the grey chart data prepared in said preparation step is also printed.

According to the image processing diagnostic method of the present invention as mentioned above, it is possible to designate a grey balance on which tastes of the printing company are reflected, using the grey chart printed on the printed matter for a diagnosis. Thus, the use of the grey balance as the standard makes it possible to perform a suitable diagnosis taking into consideration an account of tastes of the printing company.

### BRIEF DESCRIPTION OF THE DRAWINGS

Fig. 1 is an illustration useful for understanding a flow of processing an image input apparatus, an image processing apparatus, and a printing system, to which an image processing diagnostic method of the present invention is applied.
Fig. 2 is a schematic structural view useful for understanding a first embodiment of an image processing diagnostic method of the present invention.
Fig. 3 is a view showing an example of a printed matter for diagnosis used in the image processing diagnostic method according to the first embodiment of the present invention.
Fig. 4 is a schematic structural view useful for understanding a second embodiment of an image processing diagnostic method of the present invention.
Fig. 5 is a view showing an example of a printed matter for diagnosis used in the image processing diagnostic method according to the second embodiment of the present invention.
Fig. 6 is a view showing an example of a grey balance diagnostic result in the embodiment of the present invention.
Fig. 7 is a view showing an example of a tone curve diagnostic result in the embodiment of the present invention.
Fig. 8 is a view showing an example of a print reproduction curve diagnostic result in the embodiment of the present invention.
Fig. 9 is a view showing an example of a color correction diagnostic result in the embodiment of the present invention.
Fig. 10 is a view showing an example of a color correction diagnostic result in the embodiment of the present invention.

### DETAILED DESCRIPTION OF PREFERRED EMBODIMENTS

Embodiments of the present invention will be described with reference to the accompanying drawings.

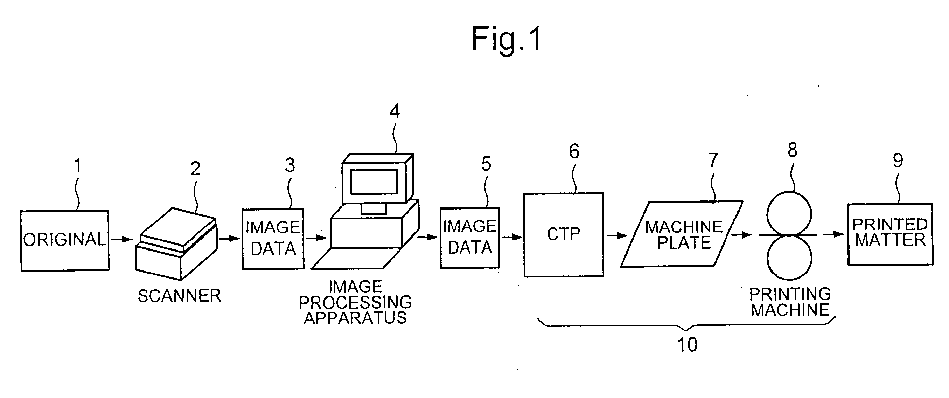

Fig. 1 is an illustration useful for understanding a flow of processing an image input apparatus, an image processing apparatus, and a printing system, to which an image processing diagnostic method of the present invention is applied.

In printing companies and the like, printed matters are created using an image input apparatus such as a scanner, an image processing apparatus, and a printing machine. According to the process of the printing, as shown in Fig. 1, an original 1 of an image of a photograph and a printed matter is read by a scanner 2 to create image data 3; a machine plate 7 is created in such a manner that the image data 3 thus created is fed to an image processing apparatus 4 to be subjected to a predetermined image processing so that a CTP (computer to plate) apparatus 6 processes image processing data 5 obtained through processing by the image processing apparatus 4 to create a machine plate 7; and the machine plate 7 is mounted on a printing machine 8 to perform printing so as to obtain a printed matter 9.

According to the embodiment of the present invention as mentioned above, the CTP apparatus 6 is used to create the machine plate 7 from the image processing data 5. However, it is acceptable that a CTF (computer to film) apparatus and a machine plate heating & pressing machine, instead of the CTP apparatus 6, are used to create the machine plate 7. It is noted, however, that the following explanation will use the CTP apparatus 6.

While it may happen that the process from the scanner 2 to the printing machine 8 is referred to as a printing system in the broad sense, here the process from the CTP apparatus 6 to the printing machine 8 is referred to as a printing system in the narrow sense. The printing system 10 in the narrow sense corresponds to an example of the printing system referred to in the present invention.

An image processing diagnostic method of the present embodiment diagnoses the quality of an image processing of an image processing apparatus 4 interposed between the scanner 2 and the printing system 10, as shown in Fig. 1, which applies the image processing to image data 3 created in the scanner 2 and outputs the same to a printing system 10. Hereinafter, there will be explained the image processing diagnostic method of the present embodiment.

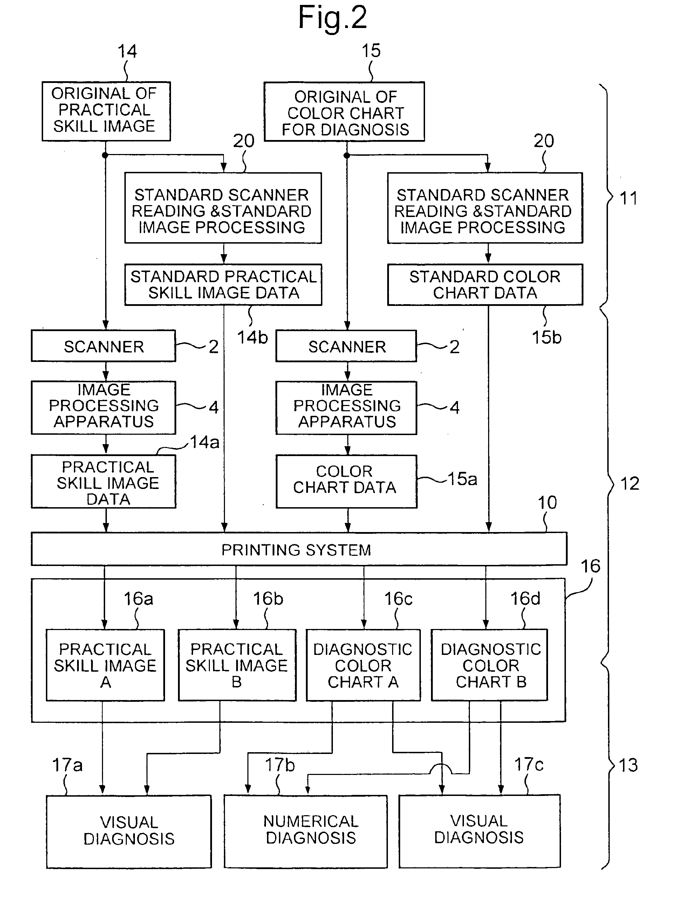

Fig. 2 is a schematic structural view useful for understanding a first embodiment of an image processing diagnostic method of the present invention.

As shown in Fig. 2, the an image processing diagnostic method of the present invention has a preparation step 11, an obtaining step 12, and a diagnostic step 13.

According to the present embodiment, a side that is subjected to the diagnosis, that is, the user side has the scanner 2, the image processing apparatus 4, and the printing system 10.

A side that performs the diagnosis, first prepares, in the preparation step 11, an original 14 of a practical skill image used in visual diagnosis, a standard practical skill image data 14b obtained by performing a standard scanner reading for the original 14 and applying a standard image processing 20 to the original 14, an original 15 of a color chart for diagnosis in which a series of color patches, which is suitable for a numerical diagnosis by colorimetric values, is arranged, and a standard color chart data 15b obtained by performing a standard scanner reading for the original 15 and applying a standard image processing 20 to the original 15.

As the original 14 of the practical skill image and the original 15 of the color chart for diagnosis, there are used a reversal original and a reflection original.

According to the present embodiment, as the original 15 of the color chart for diagnosis, there is used one, which conforms to the color chart determined by IT-8 that is one of the internal standard.

As the original 15 of the color chart for diagnosis, it is not restricted to the color chart determined by IT-8, and any one is acceptable, as a color chart, which is capable of diagnosing. The use of a color chart, which is greater in number of colors than IT-8, for example, 729 colors, makes it possible to perform a diagnosis with greater accuracy. Here the explanation will be continued assuming that the color chart determined by IT-8 is used.

The standard practical skill image data 14b and the standard color chart data 15b are obtained in such a manner that the original 14 of the practical skill image and the original 15 of the color chart for diagnosis are read by a standard scanner at a side performing diagnosis, and are stored in medium such as a CD-ROM upon applying to it a standard image processing based on know-how stored at the side performing diagnosis.

In the obtaining step 12, the printing system 10 (cf. Fig. 1) receives: a practical skill image data 14a obtained by means of reading for the original 14 of the practical skill image prepared in the preparation step 11 by the scanner 2 (cf. Fig. 1) at the user side and applying an image processing to the original 14 by the image processing apparatus 4 (cf. Fig. 1); the standard practical skill image data 14b prepared in the preparation step 11; a color chart data 15a obtained by means of reading for the original 15 for the color chart for diagnosis prepared in the preparation step 11 by the scanner 2 (cf. Fig. 1) at the user side and applying an image processing to the original 15 by the image processing apparatus 4 (cf. Fig. 1); and the standard color chart data 15b prepared in the preparation step 11, and there is obtained a printed matter 16 for diagnosis in which printed on a sheet of paper are a practical skill image A 16a according to the practical skill image data 14a, a practical skill image B 16b according to the standard practical skill image data 14b, a color chart A 16c for diagnosis according to the color chart data 15a, and a color chart B 16d for diagnosis according to the standard color chart data 15b.

Next, a side performing diagnosis carries out a diagnosis according to the diagnostic step 13 using the printed matter 16 for diagnosis. In the diagnostic step 13, there are carried out a visual diagnosis 17a using the practical skill image A 16a printed on the printed matter 16 for diagnosis and the practical skill image B 16b, a numerical diagnosis 17b according to colorimetric values of the color patches constituting the color chart A 16c for diagnosis and the color chart B 16d for diagnosis, which are printed on the printed matter 16 for diagnosis, and a visual diagnosis 17c using the color chart A 16c for diagnosis and the color chart B 16d for diagnosis, which are printed on the printed matter 16 for diagnosis.

As contents of the visual diagnosis, there are carried out a diagnosis by a comparison of the practical skill image A with the practical skill image B, a diagnosis by a comparison of the color chart A for diagnosis and the color chart B for diagnosis, and a visual diagnosis for a sharpness amount. In the diagnosis for a sharpness amount, a comparison of the practical skill image A with the practical skill image B is visually performed, so that a diagnosis is carried out on items such as intensity of the sharpness, a white margin, a black margin, and harshness.

As contents of the numerical diagnosis, the following items can be raised.
1. Grey balance.
2. Printing reproduction curve.
3. Tone curve.
4. Color balance (color correction)

Incidentally, a preparation of the standard color chart data 15b in the preparation step 11, a printing of the color chart B 16d for diagnosis on the a printed matter 16 for diagnosis in the obtaining step 12, and the diagnosis using the color chart B 16d for diagnosis in the diagnostic step 13 are not necessary for an image processing diagnostic method of the present invention. However, in the event that those features are added, a comparison of numerical results based on the diagnosis using the color chart A 16c for diagnosis and the diagnosis using the color chart B 16d for diagnosis, which are printed on the same printing condition, makes it possible to compare more in detail the image processing in the image processing apparatus 4 (cf. Fig. 1) at the user side with the standard image processing 20 at the side performing the diagnosis.

In the side performing the diagnosis, transmission of diagnostic results on the items to a user or going on a visit to a user make it possible to provide for the user an effective advice.

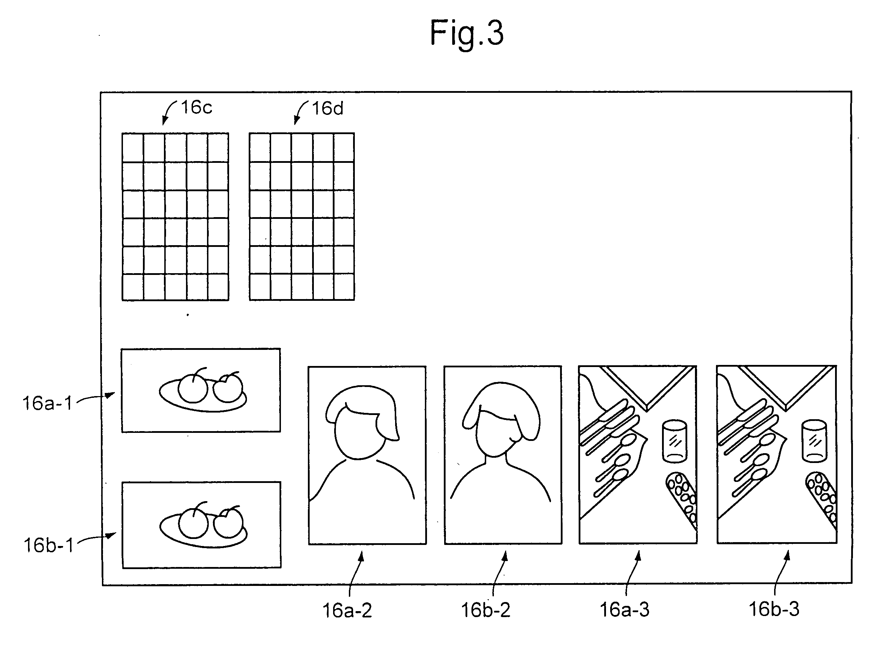

Fig. 3 is a view showing an example of a printed matter for diagnosis used in the image processing diagnostic method according to the first embodiment of the present invention.

As shown in Fig. 3, printed on the printed matter 16 for diagnosis are a still life image A 16a_1, a still life image B 16b_1, a portrait image A 16a_2, a portrait image B 16b_2, a grey image A 16a_3, a grey image B 16b_3, a color chart A 16c for diagnosis, and a color chart B 16d for diagnosis.

In the present embodiment, as the practical skill images, there are adopted three types of practical skill images of the still life image, the portrait image, and the grey image. The reason why this is to do so is that in the color printing a view point for diagnosis is different between general still life images, landscape images and the like, and a portrait image in which a skin color of a person is regarded as important. And further, in order to perform a visual diagnosis for the reproduction quality of grey with great accuracy, it is effective to include an image, which has plenty of grey portions.

In the side of performing a diagnosis, a visual comparison of the still life image A 16a 1 with the still life image B 16b_1 diagnoses an image processing by the scanner 2 and the image processing apparatus 4 at the user side through comparison with standard scanner reading and image processing. This is also similar as to the portrait image A 16a_2 and the portrait image B 16b_2, and as to the grey image A 16a_3 and the grey image B 16b_3.

With respect to the color chart A 16c, a colorimeter is used to measure the color patches constituting the color chart A 16c so that colorimetric values are determined, and thus a numerical diagnosis is performed in accordance with the colorimetric values thus determined.

Further, a colorimeter is used to measure the color patches constituting the color chart B 16d so that colorimetric values are determined, and thus a numerical diagnosis is performed in accordance with the colorimetric values thus determined. And a diagnosis is performed through a comparison of the diagnostic result of the color chart A 16c with the diagnostic result of the color chart B 16d. it is acceptable that a diagnosis is performed through a visual comparison of the color chart A 16c on the printed matter 16 for diagnosis with the color chart B 16d.

A detail of the numerical diagnosis will be described later, and next there will be described a second embodimwent of the present invention.

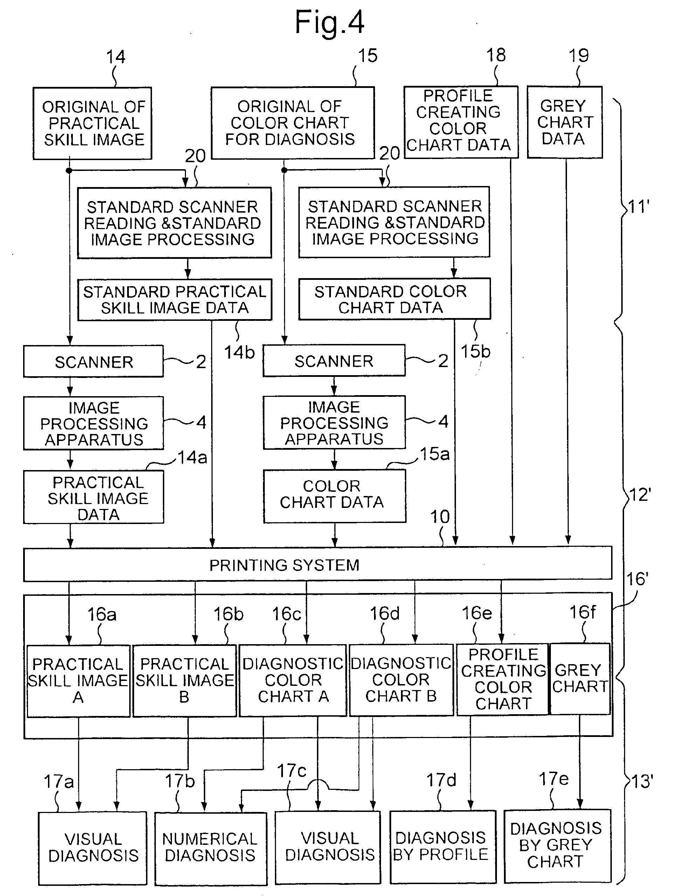

Fig. 4 is a schematic structural view useful for understanding a second embodiment of an image processing diagnostic method of the present invention.

As shown in Fig. 4, a preparation step 11' in the second embodiment is equivalent to one in which steps of preparing a profile creating color chart data 18 and a grey chart data 19 are added to the preparation step 11 in the first embodiment shown in Fig. 2.

The profile creating color chart data 18 represents a profile creating color chart wherein a series of color patches, which is suitable for creating a printing profile representative of the association between the image data in the printing system 10 (cf. Fig. 1) at the user side and colors of printing images, is arranged. The grey chart data 19 represents a grey chart consisting of a plurality of grey patches mutually different from one another in grey balance.

An obtaining step 12' in the second embodiment obtains a printed matter 16' for diagnosis in which a profile creating color chart 16e according to the profile creating color chart data 18 prepared in the preparation step 11', and a grey chart 16f according to the grey chart data 19 prepared in the preparation step 11' are printed together with the practical skill image A 16a, the practical skill image B 16b, the color chart A 16c for diagnosis and the color chart B 16d for diagnosis.

A diagnostic step 13' performs a visual diagnosis 17a using the practical skill image A 16a printed on the printed matter 16' for diagnosis and the practical skill image B 16b, a numerical diagnosis 17b according to colorimetric values of the color patches constituting the color chart A 16c for diagnosis and the color chart B 16d for diagnosis, which are printed on the printed matter 16' for diagnosis, a visual diagnosis 17c using the color chart A 16c for diagnosis and the color chart B 16d for diagnosis, which are printed on the printed matter 16' for diagnosis, a numerical diagnosis 17d using the profile creating color chart 16e, which is printed on the printed matter 16' for diagnosis, and a numerical diagnosis 17e using the grey chart 16f, which is printed on the printed matter 16' for diagnosis.

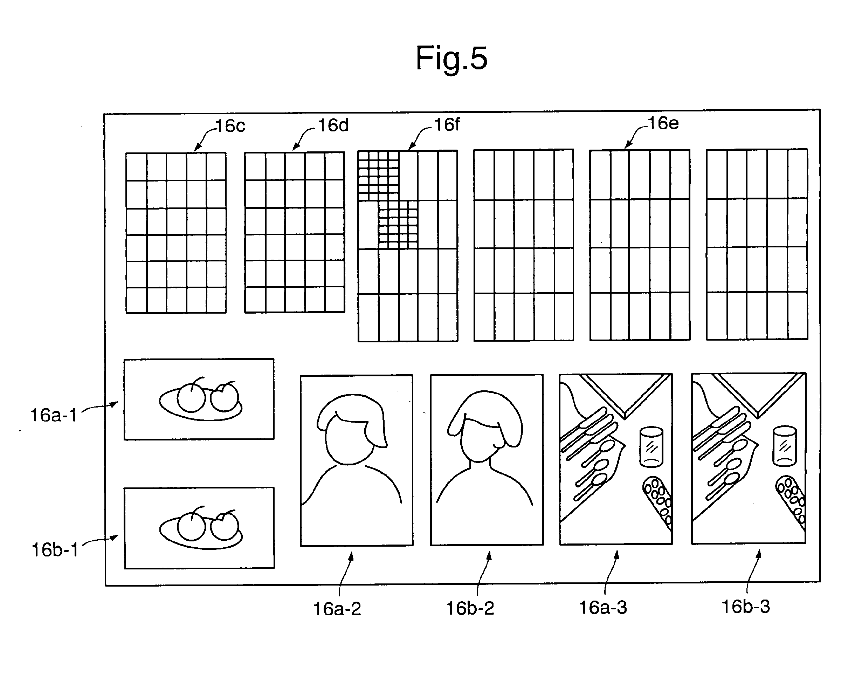

Fig. 5 is a view showing an example of a printed matter for diagnosis used in the image processing diagnostic method according to the second embodiment of the present invention.

As shown in Fig. 5, printed on the printed matter 16' for diagnosis are the still life image A 16a_1, the still life image B 16b_1, the portrait image A 16a_2, the portrait image B 16b_2, the grey image A 16a_3, the grey image B 16b_3, the color chart A 16c for diagnosis, and the color chart B 16d for diagnosis, and in addition the profile creating color chart 16e and the grey chart 16f.

The profile creating color chart 16e is obtained when the profile creating color chart data 18, which is prepared by the side performing a diagnosis in the preparation step 11', is printed by the printing system (cf. Fig. 1) at the used side. In the profile creating color chart 16e, there is arranged a series of color patches suitable for creating a printing profile representative of the association between image data and colors of printing images.

Simulation of a printing by a proofer and the like at the side performing a diagnosis using the printing profile based on the profile creating color chart 16e makes it possible to remove an effect of fluctuation of printing conditions in the printing system 10 at the user side on the visual diagnosis and the numerical diagnosis. Thus, it is possible to exactly diagnose the image processing in the image processing apparatus 4 (cf. Fig. 1) at the user side.

The grey chart 16f is obtained when the grey chart data 19 prepared in the preparation step 11' at the side performing a diagnosis is printed by the printing system 10 (cf. Fig. 1) at the user side. The grey chart 16f consists of a plurality of grey patches mutually different from one another in grey balance.

Of the grey patches constituting the grey chart 16f printed on the printed matter 16' for a diagnosis, a selection of grey patches by the user side, which are considered to be most excellent in balance, makes it possible to designate a grey balance on which taste of a printing company is reflected. And the use of the grey valance as the reference makes it possible to perform a suitable diagnosis taking into a consideration the taste of the printing company.

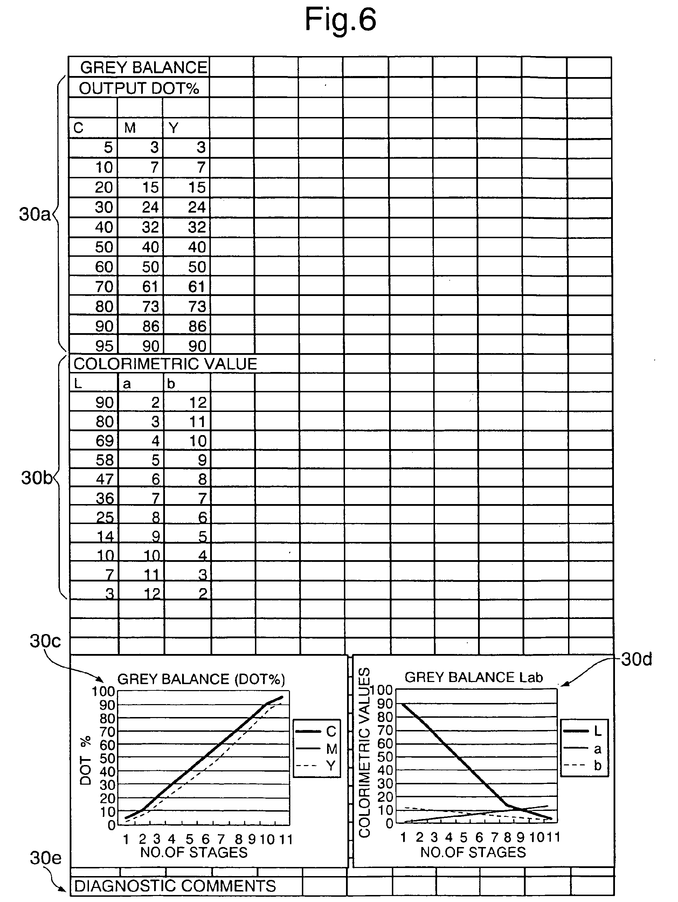

Fig. 6 is a view showing an example of a grey balance diagnostic result in the embodiment of the present invention.

Fig. 6 shows a grey balance diagnostic sheet 30, which is obtained in such a manner that the grey chart 16f printed on the printed matter 16' for a diagnosis shown in Fig. 5 is subjected to a diagnosis at the side performing a diagnosis.

On the upper portion of the grey balance diagnostic sheet 30, there are shown output dot% values 30a of grey patches selected by the user side and colorimetric values 30b obtained through a measurement of the grey patches. The output dot% values 30a consist of 11 stages for each of three colors of C (cyan), M (magenta) and Y (yellow). The colorimetric values 30b consist of 11 stages for each of three elements of L, a and b.

On the lower portion of the grey balance diagnostic sheet 30, there are shown a grey balance (dot%) graph 30c, wherein dot% values for each of the stages are plotted in accordance with the output dot% values 30a, and a grey balance Lab graph 30d, wherein colorimetric values for each of the stages are plotted in accordance with the colorimetric values 30b.

On the lower portion of those graphs 30c and 30d, there are provided diagnostic comments columns 30e.

The side performing a diagnosis grasps a user's taste as to the grey balance from the grey balance diagnostic sheet 30, so that the side performing a diagnosis can provide a suitable advice to the user.

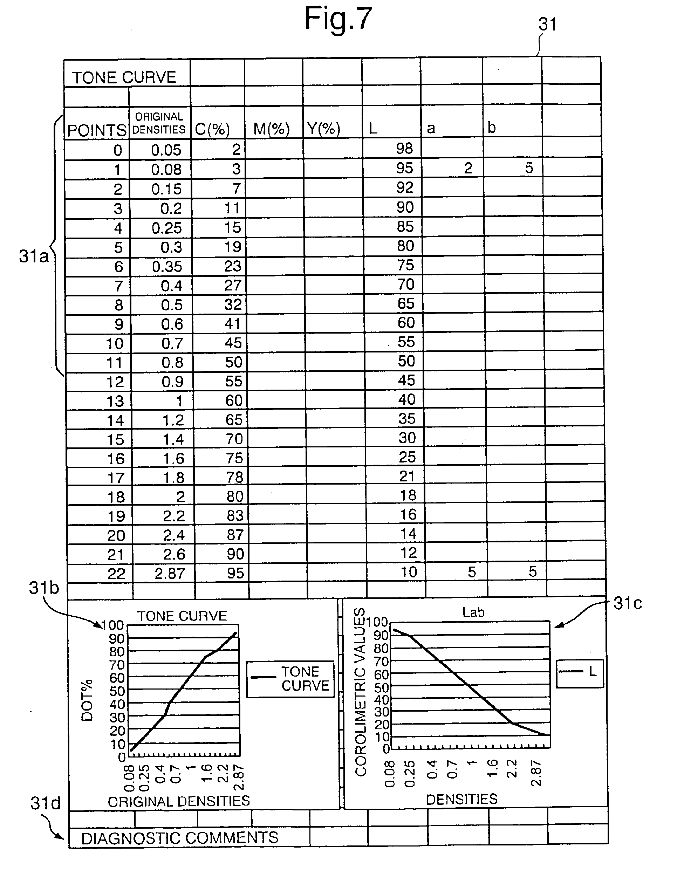

Fig. 7 is a view showing an example of a tone curve diagnostic result in the embodiment of the present invention.

Fig. 7 shows a tone curve diagnostic sheet 31, which is obtained as a result of a diagnosis by the side performing a diagnosis as to the color chart A 16c for diagnosis on the printed matter 16 for diagnosis shown in Fig. 3 and the printed matter 16' for diagnosis shown in Fig. 5.

On the upper portion of the tone curve diagnostic sheet 31, there is shown a tone curve data 31a consisting of: original densities in points from 0 to 22 on the color chart determined by IT-8 that is one of the International Standards, which is provided from the side performing a diagnosis; dot% for colors C, M and Y; and colorimetric values for L, a and b. The original density represents a density before an image processing, which is obtained through reading by the user's scanner 2 (cf. Fig. 2 and Fig. 4) the original 15 (cf. Fig. 2 and Fig. 4) of the color chart for a diagnosis provided from the side performing a diagnosis. The dot% for the color denotes a value after the image processing.

On the lower portion of the tone curve diagnostic sheet 31, there are shown a tone curve graph 31b representative of the association between the original density and the dot%, or the association between the input and the output as to the image processing apparatus 4, and a Lab graph 31c representative of the association between the original densities and the colorimetric values.

On the lower portion of the graphs 31b and 31c, there are provided diagnostic comments columns 31d.

At the side performing a diagnosis, the tone curve diagnostic sheet 31 is used to quantitatively diagnose whether a user's tone curve has a defect such as a tone jump as compared with a pattern of an ideal tone curve, so that the side performing a diagnosis can provide for the user an effective advice. In the event that the side performing a diagnosis is involved in tone curve data for plurality of users, it is possible to perform a diagnosis in comparison with those data.

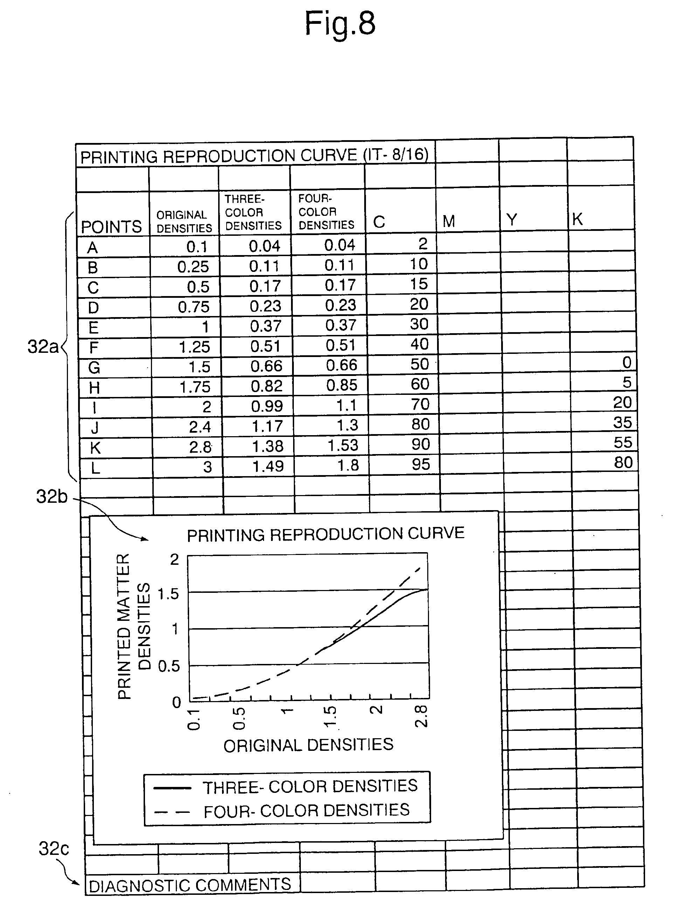

Fig. 8 is a view showing an example of a print reproduction curve diagnostic result in the embodiment of the present invention.

Fig. 8 shows a printing reproduction curve diagnostic sheet 32, which is obtained as a result of a diagnosis by the side performing a diagnosis as to the color chart A 16c for diagnosis on the printed matter 16 for diagnosis shown in Fig. 3 and the printed matter 16' for diagnosis shown in Fig. 5. Incidentally, the color chart A 16c for diagnosis is one in which the original 15 (cf. Fig. 2 and Fig. 4) of the color chart for a diagnosis based on IT-8 that is one of the International Standards, which is provided from the side performing a diagnosis, is outputted from the user's scanner 2 (cf. Fig. 1), the image processing apparatus 4, and the printing system.

The printing reproduction curve diagnostic sheet 32 shows printing reproduction data 32a consisting of:
original densities (densities for input data to the image processing apparatus 4 (cf. Fig. 2 and Fig. 4)) at the respective points from A point to L point determined by IT-8 on the color chart A 16c (cf. Fig. 3 and Fig. 5) for a diagnosis; three-color densities and four-color densities of the printed matters 16 and 16' (cf. Fig. 2 and Fig. 4) outputted from the printing system 10 (cf. Fig. 4); and
values of dot% for C, M, Y and K, and a printing reproduction curve graph 32b in which the relationship between the original densities and three-color densities and four-color densities of the printed matters 16 and 16' (cf. Fig. 2 and Fig. 4) is plotted.

On the lower portion of those graphs 32a and 32b, there are provided diagnostic comments columns 32c.

At the side performing a diagnosis, the printing reproduction curve diagnostic sheet 32 is used to quantitatively diagnose as to printing reproduction quality of a user's printing system, so that the side performing a diagnosis can provide for the user an appropriate advice.

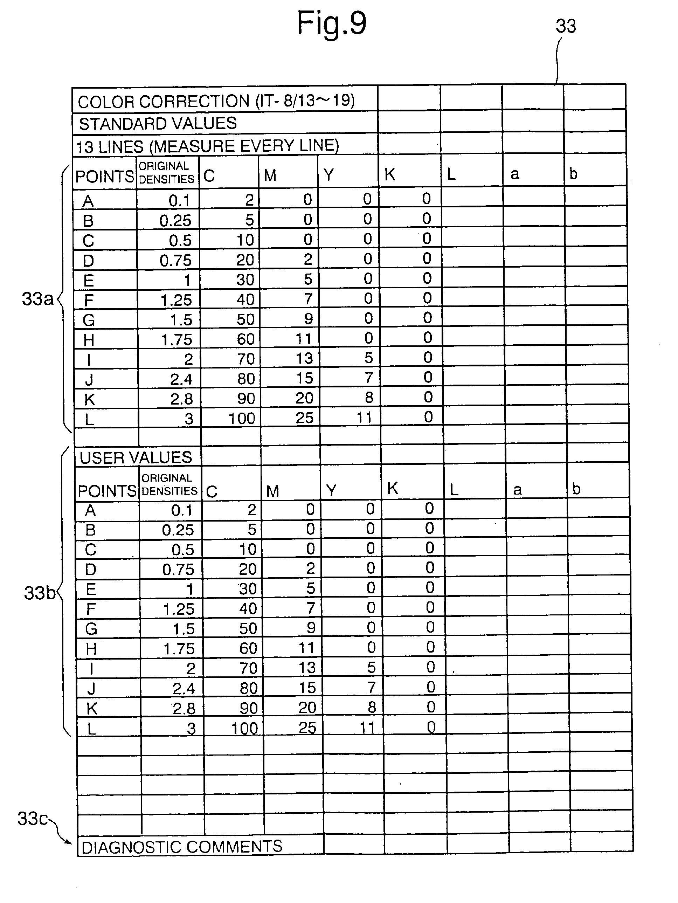

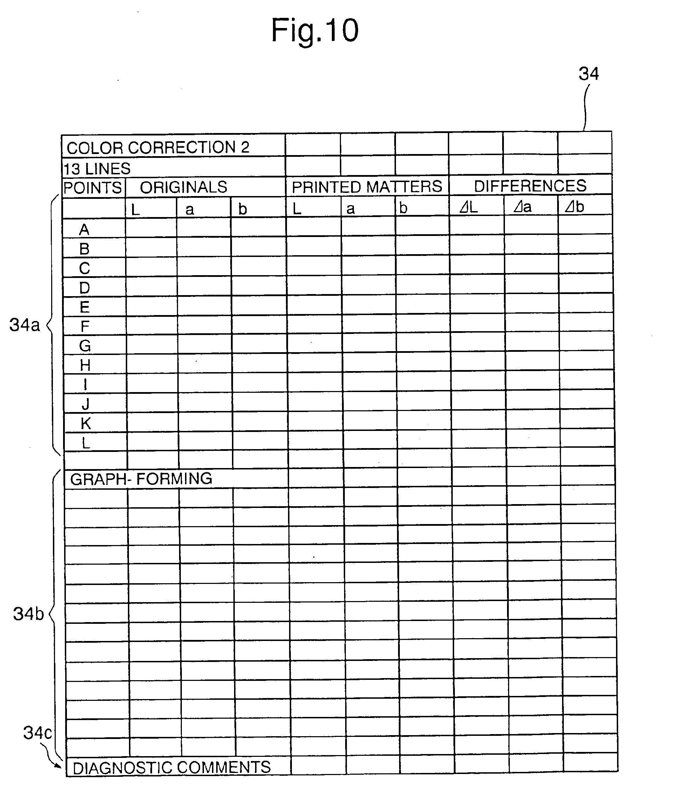

Fig. 9 is a view showing an example of a color correction diagnostic result in the embodiment of the present invention. Fig. 10 is a view showing an example of a color correction diagnostic result in the embodiment of the present invention.

Fig. 9 and Fig. 10 show color correction diagnostic sheets 33 and 34, respectively, which are obtained as a result of a diagnosis by the side performing a diagnosis as to the color chart A 16c for diagnosis on the printed matter 16 for diagnosis shown in Fig. 3 and the printed matter 16' for diagnosis shown in Fig. 5. Incidentally, the color chart A 16c for a diagnosis is one in which the original 15 (cf. Fig. 2 and Fig. 4) of the color chart for a diagnosis based on IT-8 that is one of the International Standards, which is provided from the side performing a diagnosis, is outputted from the user's scanner 2 (cf. Fig. 1), the image processing apparatus 4, and the printing system.

The color correction diagnostic sheet 33 is created for each of 13 to 19 rows on the color chart determined by IT-8. The color correction diagnostic sheet 33 shows standard values 33a obtained through a color measurement of the color chart B 16d for diagnosis based on data prepared by the side performing a diagnosis, and user values 33b obtained through a color measurement of the color chart A 16c for a diagnosis subjected to the image processing at the user side.

Each of the standard values 33a and the user values 33b include data of original densities in 12 points from A to L determined by IT-8 on the color chart A 16c (cf. Fig. 3 and Fig. 5) for a diagnosis, three-color densities and four-color densities, values of dot% for C, M, Y and K, and colorimetric values for L, a and b.

When the standard values 33a and the user values 33b of the color correction diagnostic sheet 33 are expressed by a graph such as a line graph, it is possible to confirm quantity and balance of colors. Further, also with respect to the balances of color-phase and chroma saturation, when they are expressed in form of a graph such as a circle graph and a radar chart, it is possible to perform a diagnosis.

It is also possible to create a color gamut using the above-mentioned data to perform a diagnosis.

On the lower portion of the color correction diagnostic sheet 33, there are provided diagnostic comments columns 33c.

The color correction diagnostic sheet 34 shown in Fig. 10 is also created for each of 13 to 19 rows on the color chart determined by IT-8. The color correction diagnostic sheet 34 shows: Lab data 34a such as L, a, and b for the originals 15 (cf. Fig. 2 and Fig. 4) in 12 points from A to L determined by IT-8, L, a, and b for the printed matters 16 and 16' (cf. Fig. 2 and Fig. 4), and differences ΔL, Δa, and Δb; Lab graphs 34b in which the above-mentioned data are expressed in form of a graph as mentioned above; and diagnostic comments columns 34c.

Incidentally, according to the present embodiment, there is explained a case where as the image input apparatus, a scanner is used. It is noted, however, that the present invention is also applicable to a case where an image input apparatus other than a scanner is used. It is acceptable that for example, a digital camera as the image input apparatus is used to photograph a practical skill image (a subject) and a color chart for a digital camera so that image data is created.

The numerical diagnosis step explained in the above-mentioned embodiments is one example of an image processing diagnostic method of the present invention, and it is acceptable that such a numerical diagnosis step can be replaced by other various analysis methods.

According to the above-mentioned embodiments, the obtaining step 12 includes the steps at the user side such as the data input and the printing. It is acceptable that the obtaining step referred to in the present invention does not include the steps at the user side such as the data input and the printing, and is involved in the steps at the diagnosis side only for obtaining the printed matters 16 and 16' for a diagnosis.

As explained above, according to the image processing diagnostic method of the present invention, it is possible to properly diagnose the quality of an image processing of an image processing apparatus interposed between an image input apparatus and a printing system.

Further, the use of the image processing diagnostic method of the present invention makes it possible to exactly grasp the states of an image input apparatus, an image processing apparatus and a printing system at the user side, and thereby contributing to a stabilization of an image processing standard data. Furthermore, the use of the image processing diagnostic method of the present invention makes it possible to reduce a difference in machine type between image input apparatuses, and thereby reducing a time for a creation of an image processing standard data when a user buys a new image input apparatus.

Saving of data obtained according to the image processing diagnostic method of the present invention for each user into a database makes it possible to perform a continuous diagnosis extending over a long period of time.

While the present invention has been described with reference to the particular illustrative embodiments, it is not to be restricted by those embodiments but only by the appended claims. It is to be appreciated that those skilled in the art can change or modify the embodiments without departing from the scope and sprit of the present invention.

## Claims

1. An image processing diagnostic method of diagnosing a quality of an image processing of an image processing apparatus interposed between an image input apparatus for receiving an image to create image data and a printing system for receiving image data to print an image, said image processing apparatus receiving the image data created by said image input apparatus and applying image processing to the image data and then outputting the same to said printing system, said image processing diagnostic method comprising:
a preparation step of preparing an original of a practical skill image used in a visual diagnosis, a standard practical skill image data obtained through reading by a standard image input apparatus for the original and applying a standard image processing to the original, and an original of a color chart for diagnosis in which a series of color patches, which is suitable for a numerical diagnosis by colorimetric values, is arranged;
an obtaining step in which there is obtained a printed matter for diagnosis wherein printed on a sheet of paper by said printing system receiving: a practical skill image data obtained by means of reading for the original of the practical skill image prepared in said preparation step by said image input apparatus and applying an image processing to the original by said image processing apparatus; the standard practical skill image data prepared in said preparation step; and a color chart data obtained by means of reading for the original of the color chart for diagnosis prepared in said preparation step by said image input apparatus and applying an image processing to the original by said image processing apparatus, are a practical skill image A according to the practical skill image data, a practical skill image B according to the standard practical skill image data, and a color chart for diagnosis according to the color chart data; and
a diagnostic step in which there are carried out a visual diagnosis using the practical skill images printed on the printed matter for diagnosis obtained in said obtaining step, and a numerical diagnosis according to colorimetric values of the color patches constituting the color chart for diagnosis, which are printed on the printed matter for diagnosis.

2. An image processing diagnostic method according to claim 1, wherein said preparation step also prepares a standard color chart data obtained through reading by said standard image input apparatus for the original of a color chart for diagnosis and applying the standard image processing to the original, and
said obtaining step obtains a printed matter for diagnosis in which printed on a sheet of paper is also a color chart for diagnosis according to the standard color chart data.

3. An image processing diagnostic method according to claim 1, wherein said preparation step also prepares profile creating color chart data representative of a profile creating color chart wherein a series of color patches, which is suitable for creating a printing profile representative of an association between the image data in said printing system and colors of printing images, is arranged; and
said obtaining step obtains a printed matter for diagnosis in which the profile creating color chart according to the profile creating color chart data prepared in said preparation step is also printed.

4. An image processing diagnostic method according to claim 1, wherein said preparation step also prepares grey chart data representative of a grey chart consisting of a plurality of grey patches mutually different from one another in grey balance; and
said obtaining step obtains a printed matter for diagnosis in which the grey chart according to the grey chart data prepared in said preparation step is also printed.
